Europäisches Patentamt

(19) European Patent Office

Office européen des brevets

(11) Publication number: **0 058 088**

**A1**

(12) # EUROPEAN PATENT APPLICATION

(21) Application number: **82300642.4**

(22) Date of filing: **09.02.82**

(51) Int. Cl.³: **H 01 M 12/06**
**H 01 M 2/02, H 01 M 2/08**

(30) Priority: **09.02.81 US 233074**

(43) Date of publication of application:
**18.08.82 Bulletin 82/33**

(84) Designated Contracting States:
**DE FR GB**

(71) Applicant: **Ray-O-Vac Corporation**
**101 East Washington Avenue**
**Madison WI 53703(US)**

(72) Inventor: **Dopp, Robert Brian**
**510, Presidential Lane**
**Madison Wisconsin(US)**

(72) Inventor: **Oltman, John Edward**
**Rt. 1**
**Mt. Horeb Wisconsin(US)**

(74) Representative: **Hedley, Nicholas James**
**Matthew et al,**
**Thames House (fifth floor) Millbank**
**London SWIP 4QF(GB)**

(54) A metal-air cell.

(57) The invention provides a metal-air button cell (10) that provides improved leak-proof properties without requiring a significant expense in manufacturing costs. The cell (10) is composed of a cathode can (12), a saucer-shaped cover (14) which is electrically insulated from the can by a grommet (16) that extends over the outer sides and the rim of the cover. A cathode assembly (24) is located in the cathode can (12) and extends to the walls (18) thereof. A resilient washer (44) is placed between the cathode assembly (24) and that part of the grommet (16) that covers the rim of the cover (14). Anode material (40) is provided together with a separator (36) to prevent shorting between anode and cathode material. The cell (10) is sealed by crimping the top edge of the can (12) against the grommet (16) which compresses the cathode between the can and the washer (44).

EP 0 058 088 A1

Croydon Printing Company Ltd.

A Metal-Air Cell

The present invention relates to metal-air cells and especially to metal-air cells having good leak-resistant properties that are simple to manufacture.

The sealing of button cells so that no electrolyte can escape is commercially very important, and there have been numerous proposals for sealing arrangements. For example, U.S. Patent Specification No. 3,746,580 (Aker et al) describes a button cell having an annular plastic moulding with an internal annular groove in which the edge of the cathode assembly is positioned. The cathode assembly with its encircling plastic moulding is inserted into a cathode can and, because the moulding is an insulator, special electrical connections are provided between the cathode and the can. A metallic anode cover with an associated grommet is placed in the open end of the can and the cell is closed by crimping the top edge of the can against the cover and grommet. The crimping force urges the cover and grommet against the moulding surrounding the cathode assembly, thereby holding the cathode firmly in place and forming a seal against electrolyte leakage. Since the crimping force is not exerted directly on the cathode assembly, there is little risk of cathode fracture during cell closure. However this arrangement is complicated and relatively expensive to manufacture. A similar arrangement is described in British Patent Specification No. 1,178,859 in which the cathode assembly is located in the aperture in the centre of an annular insulating grommet and hermetically sealed thereto.

It has been suggested in U.S. Patent Specification No. 3,897,265 (Jaggard) that the annular insulator around the cathode assembly described in the Aker Specification could be omitted and so in the arrangement described in this Specification the cathode assembly extends right to the walls of the cathode can. The cell is sealed in a manner similar to the Aker cell by crimping the top edge of the can against a cover and grommet arrangement. Since the cathode assembly extends to the wall of the cathode can, the periphery of the cathode is compressed by the crimping force. We have found that the crimping operation can fracture the cathode assembly and provide a leakage path for electrolyte which, when leakage occurs, causes the cell to short. Similar arrangements are described in U.S. Patent Specification Nos. 4,054,726; 4,041,211; and 4,118,544 and in British Patent Specification No. 1,319,780.

U.S. Patent Specification No. 4,066,822 acknowledges that cells of the type described in the Jaggard Specification are prone to leak electrolyte. However, the solution it proposes is to include a microporous membrane located between the metal cathode can and the cathode itself and to compress the edge portion of the membrane between an annular metal insert and the cathode can to provide a compressed, nonporous seal. However, this adds to the complexity (and therefore the cost) of manufacture and does not decrease the risk of cathode fracture during cell closure.

The present invention provides a surprisingly simple but effective solution to the problem of cathode fracture without involving a complicated arrangement of parts that is expensive to assemble.

According to the present invention there is provided a metal-air button cell which comprises an open-ended metal can, an air depolarisable cathode located in, and extending to the side wall of, the can, a saucer-shaped cover located in the open end of the can with its rim facing into the can and a grommet extending over the rim and at least part of the outer side of the cover, wherein the top edge of the can is crimped against the grommet to seal the open end of the can, characterised in that a resilient washer is located between the cathode and that part of the grommet that extends over the rim of the cover.

We have found that the washer provides a good sealing arrangement, reduces the risk of cathode fracture during crimping and is easy and cheap to insert during the manufacture of the cell.

Preferably the washer is made of a thermoplastic material e.g. polyethylene or polystyrene.

An especially preferred arrangement is for the bottom of the can to have a shoulder and the arrangement is such that the periphery of the cathode is compressed between the washer and the shoulder by the crimping force. Such an arrangement provides a good seal against electrolyte seeping around the edge of the cathode assembly.

To achieve the most effective sealing effect the outer periphery of the washer should touch the can and should be biased against the side wall of the can.

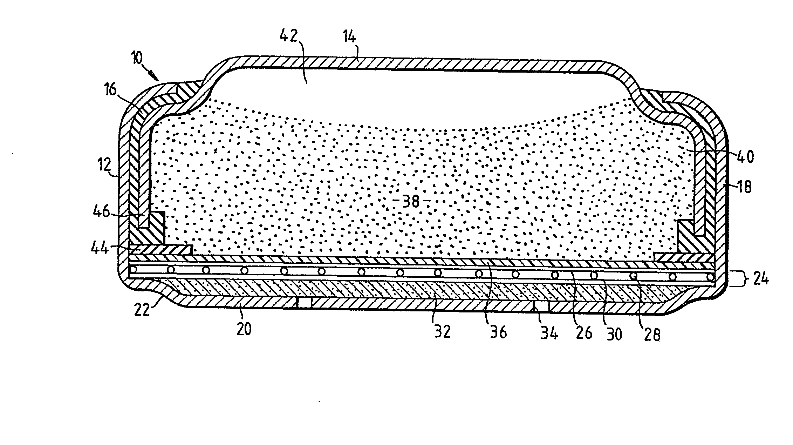

There will now be described a cell in accordance with the present invention with reference to the accompanying drawing which shows a cross-sectional elevation of the cell.

Referring to the accompanying drawing, the cell 10 is composed of a housing formed by a can 12 and a saucer-shaped cover 14. The can 12 has an open end into which the cover 14 is inserted. The can and the cover are insulated from each other by a grommet 16, which is annular and has a J-shaped cross-section. It extends over the outer side wall, the rim and part of the inner wall of the cover. The can 12 forms the positive (cathodic) terminal of the cell, while the cover 14 forms the negative (anodic) terminal. The can and the cover may be made of the same or different materials, for example nickel-coated steel, nickel, alloys of nickel and stainless steel. The can has a wall portion 18, a flat bottom portion 20 and a shoulder 22.

Located within the cathode can 12 is an air (oxygen) depolarisable cathode assembly 24, which is a laminar construction composed of an activating layer 26, a porous current collector 28 and a porous hydrophobic layer 30. The activating layer 26 comprises a pressed mixture of activated carbon and a hydrophobic material, for example a polyolefin, e.g. polyethylene, polypropylene, or a fluorocarbon, for example polytetrafluoroethylene. It is preferred that the activating layer is a mixture of polytetrafluoroethylene and activated carbon. The preferred mixture ratio, by weight, is 50-80% activated carbon and 50-20% polytetrafluoroethylene; more preferred is about 55-65% activated carbon and 35-45% polytetrafluoroethylene. Pressed adjacent to, embedded in or contained within, the material of the activating layer 26 is the current collector 28. The current collector is in electrical and physical contact with the cathode container and made of a conductive metal, e.g. nickel or stainless steel, preferably in the form of a mesh or screen. It is preferred that the current collector is an etched nickel screen. The current collector is etched to improve the bond between the activating layer and the current collector. This improved bond reduces the impedence and increases the capacity characteristics of the cell. It has been found that only a very small amount of etching is required for example the etching may remove of the order of 0.3% to 1.0% of the metal. The etching can be done by any method known to those skilled in the art. However, we used acid etching.

The hydrophobic layer 30 permits the passage of oxygen to the active layer 26 while preventing the electrolyte of the cell from leaking. It is sometimes desirable to use more than one.such hydrophobic layer in case one of the layers contains a fault through which the electrolyte can leak. Thus, the use of two or more such layers reduces the risk of electrolyte leakage. The hydrophobic layer 30 is composed of a hydrophobic polymer material having sufficient porosity to permit an amount of oxygen to flow therethrough that is sufficient to provide the desired current density requirement of the cell. Suitable materials include, for example, polyethylene, polypropylene, nylon and polymers of vinylidine chloride, vinyl chloride and fluorocarbons e.g. polytetrafluoroethylene. Polytetrafluoroethylene is the preferred material.

Located between the cathode assembly 24 and the flat bottom of the cathode can 12 is a porous layer 32 that serves both to distribute air uniformly over the cathode assembly and to provide support for the cathode assembly.

Air is admitted to the cathode assembly 24 through one or more holes 34 formed in the flat bottom portion 20 of the can 12. They must, of course, be of a sufficient size to admit the required amount of air to the cathode assembly 24.

Above the cathode assembly 24 is located a separator 36 that separates the cathode assembly from the anode compartment 38 of the cell. The separator 36 can be made of any conventional material known in the art. These known materials include Pudo cellophane, Acropor WA (woven nylon base treated with polyvinylchloride), Celgard (microporous polypropylene), Permion (polyethylene grafted with polyvinyl chloride), Viscon (regenerated cellulose treated with polyvinylchloride), Pellon (polyester based), Dynel (acrylic copolymer) and the like.

Located within the anode compartment 38 is the anode material 40, which may be any of the suitable porous materials known to the art, e.g. a gelled amalgamated zinc powder, or a zinc compact. There is a void space 42 between the anode material 40 and the cover 14 to allow for expansion of the anode material during discharge of the cell.

An electrolyte solution is added to the cell during assembly and may be any one of the type generally known in the art. A suitable alkaline electrolyte is aqueous KOH or NaOH and a suitable electrolyte for a cell using an organic redox system is an aqueous solution of zinc chloride and mixtures of zinc chloride and ammonium chloride. A suitable substantially neutral electrolyte system is ammonium chloride or manganese chloride or a mixture of manganese chloride and magnesium chloride solution.

A washer 44 made of resilient material is placed on top of the separator 36 and lies around the periphery thereof. It may be made of any non-conductive alkali-resistant resilient material, e.g. polyacetals, ABS (acrylonitrile-butadiene-styrene) resins, polyamides (for example Nylon 6; Nylon 6,6; Nylon 6,10; Nylon 11; and Nylon 12), synthetic rubbers (for example butyl rubber, silicone rubber, ethylene-propylene rubber, and chloroprene rubber), polyolefins (for example polyethylene and polypropylene), fluorocarbons (for example polytetrafluoroethylene) and other polymers such as styrene. The preferred materials are polyethylene and polystyrene.

The grommet 16 may be made of one of the materials listed above in connection with the washer 44, but the washer and the grommet need not be made of the same material. The grommet 16 is preferably covered with an adhesive e.g. an epoxy resin, a polyamide or bitumen prior to incorporation into the cell.

The internal components of the cell are rigidly retained by crimping the top edge of the cathode can 12 over the grommet 16. This presses the grommet 16 and the cover 14 downwardly against the washer 44 which in turn urges the separator 26 and the cathode assembly 24 against the shoulder 22 of the can 12. Under the influence of the crimping pressures an electrolyte-tight seal is produced between the grommet 16 and the washer 44, between the washer and the separator 36 and between the cathode assembly 24 and the shoulder 22 so that electrolyte cannot penetrate into the porous layer 32 by creeping around the cathode assembly.

A preferred method of making the cell of the present invention is by placing the porous layer 32 into the cathode can 12, placing thereon the cathode assembly 24, the separator 36 and then inserting the washer 44. The grommet 16 is then fitted onto the cover 14 with the edge 46 of the cover fitting into a groove in the grommet. A metered amount of anode material and electrolyte is put into the anode cover and the anode portion of the cell is then inverted and fitted into the cathode portion of the cell. The can is crimped as known by those skilled in the art, to form a completed cell.

The completed cell is then centrifuged in a manner which moves the zinc anode material against the separator. It has been found that when the centrifuge time is about one minute, a 200 G force is insufficient to obtain the desired effect and at about 1400 G damage to air cathode can occur. The preferred centrifugal force is about 700-1200 G, or more preferably about 900 G when the centrifuge time is one minute. These skilled in the art can easily ascertain the force to utilize for lower or greater time periods treatment. However, it has found that when 900 G are used the maximum effect is obtained between one to three minutes, <sup>after</sup> which time no greater effects are obtained, and it is possible to start to damage the air cathode.

## Claims

1.          A metal-air button cell (10) which comprises an open ended metal can (12), an air-depolarisable cathode (24) located in, and extending to the side wall (18) of, the can, a saucer-shaped cover (14) located in the open end of the can with its rim (46) facing into the can and a grommet (16) extending over the rim and at least part of the outer side of the cover, wherein the top edge of the can is crimped against the grommet to seal the open end of the can, characterised in that a resilient washer (44) is located between the cathode and that part of the grommet that extends over the rim of the cover.

2.          A cell as claimed in claim 1, characterised in that the outer periphery of the washer (44) touches the side wall of the can (12).

3.          A cell as claimed in claim 1 or claim 2, characterised in that the washer (44) extends further into the interior of the cell than the grommet (16).

4.          A cell as claimed in any one of claims 1 to 3, wherein the washer (44) is made of polyethylene or polystyrene.

5.          A cell as claimed in any one of claims 1 to 4, wherein the grommet (16) is covered with a coat of adhesive.

6.          A cell as claimed in any one of claims 1 to 5, wherein the bottom of the can (12) has a shoulder (22), the arrangement being such that the periphery of the cathode (24) is compressed between the shoulder and the washer (44) by the crimping force.

7.          A cell as claimed in any one of claims 1 to 6, wherein the grommet (16) extends over part of the inside wall of the saucer-shaped cover (14).

1/1

## EUROPEAN SEARCH REPORT

European Patent Office

Application number

EP 82300642.4

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | GB - A - 1 566 061 (KABUSHIKI) <br> * Fig. 2A, part 8 * <br> ---- | 1,2 | H 01 M 12/06 <br> H 01 M 2/02 <br> H 01 M 2/08 |

TECHNICAL FIELDS SEARCHED (Int.Cl. 3)

H 01 M

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| VIENNA | 13-05-1982 | LUX |

EPO Form 1503.1 06.78